# EUROPÄISCHE PATENTSCHRIFT

(11) **EP 0 521 124 B1**
(45) Veröffentlichungstag und Bekanntmachung des Hinweises auf die Patenterteilung: **17.05.1995**
(21) Anmeldenummer: 92902934.6
(22) Anmeldetag: 20.01.1992
(51) Int. Cl.: B64G 1/40

(54) **VORRICHTUNG ZUM ENTFALTEN EINES ELEMENTENSTAPELS**
DEVICE FOR UNFOLDING A STACK OF ELEMENTS
DISPOSITIF POUR LE DEPLOIEMENT D'UNE PILE D'ELEMENTS

(30) Priorität: 21.01.1991 DE 4101637; 02.08.1991 DE 4125704
(43) Veröffentlichungstag der Anmeldung: 07.01.1993
(73) Patentinhaber: BERGER, F. W. Adolf, D-80809 München (DE)
(72) Erfinder: BERGER, F. W. Adolf, D-80809 München (DE)
(74) Vertreter: Betten & Resch
(86) Internationale Anmeldenummer: DE9200032
(87) Internationale Veröffentlichungsnummer: WO9212898

(56) Entgegenhaltungen:
- FR-A- 1 500 539
- FR-A- 2 354 925
- FR-A- 2 643 871
- US-A- 2 310 711

## Beschreibung

Die Erfindung betrifft eine Kombination einer Mehrzahl von untereinander paarweise verbundenen Elementen, die aus einem gefalteten Zustand, in dem die Elemente aneinanderliegend angeordnet sind, in einen zumindest teilweise entfalteten Zustand überführbar sind, mit einer Einrichtung zum Ermöglichen des Überführens der Elemente von dem gefalteten in dem zumindest teilweise entfalteten Zustand, wobei benachbarte Elemente um eine gemeinsame Schwenkachse gegeneinander verschwenkbar sind und jedes Element vier zur Schwenkachse parallele Seitenkanten aufweist.

Beim bekannten Stand der Technik werden die einzelnen Elemente zickzackförmig gefaltet und bilden auf diese Weise einen Stapel. Mit Ausnahme des obersten und untersten Elements, welches jeweils eine Schwenkachse an einem einzigen Ende aufweisen kann, sind sämtliche dazwischenliegenden Elemente an beiden Enden an benachbarten Seitenkanten mit je einer Schwenkachse versehen, die beispielsweise durch je ein Scharnier realisiert werden. Jedes Paar benachbarter Elemente weist somit eine einzige, gemeinsame Schwenkachse auf.

Aus der US-A-2,310,711 ist ein Spielzeug mit paarweise verbundenen, faltbaren und entfaltbaren Elementen bekannt, die über ein System von flexiblen Bändern wahlweise nach zwei Alternativen entfaltet werden können; die Elemente rollen hierbei beim Entfalten an ihren benachbarten, gekrümmten Seitenflächen ab.

Der Erfindung liegt die Aufgabe zugrunde, eine alternative Lösung aufzuzeigen, die die Verwendungsmöglichkeiten einer gattungsgemäßen Kombination bei speziellen technischen Einsatzgebieten erweitern.

Diese Aufgabe wird im wesentlichen durch die kennzeichnenden Merkmale des Patentanspruchs 1 gelöst. Aufgrund der speziellen Anordnung der Bänder bzw. Bandsysteme ist es möglich, die Elemente nach zwei Alternativen zu entfalten bzw. zu falten, nachdem ein jedes Element gegenüber dem benachbarten Element wahlweise sowohl um die eine als auch um die andere gemeinsame Schwenkachse verschwenkt werden kann.

Dies führt einmal dazu, daß der gefaltete Elementenstapel wahlweise so entfaltet werden kann, daß entweder die einen oder die anderen Seiten der Elemente in einer bestimmten, vorgegebenen Richtung ausgerichtet sein können. Dies kann insbesondere bei einem besonders bevorzugten Anwendungsgebiet der vorliegenden Erfindung, nämlich dann, wenn es sich bei den Elementen um Regalelemente beispielsweise eines Materiallagers handelt, von Vorteil sein. Werden die Regalelemente nach dem Stand der Technik ziehharmonikaartig auseinandergezogen, so ist dem Benutzer stets nur die eine, dem Benutzer zugewandte Regalseite zugänglich; im Falle der vorliegenden Erfindung ist dem Benutzer jedoch je nach dem, nach welchen der beiden Alternativen er das Regalsystem entfaltet, wahlweise entweder die eine oder die andere Regalseite zugänglich. Befindet sich die erfindungsgemäße, als Regalelementensystem ausgebildete Vorrichtung zwischen zwei nebeneinanderliegenden Arbeitsplätzen, so ist nach der erfindungsgemäßen Lösung in ergonomisch optimaler Weise von beiden Arbeitsplätzen ein Zugriff zu beiden Seiten der Regalelemente möglich.

Ein weiteres, besonders bevorzugtes Einsatzgebiet der Erfindung ist die Weltraumtechnik, wobei es sich bei den Elementen um Solarpanele an einem künstlichen Satelliten handelt. Sind die Solarpanele, wie aus dem Stand der Technik bekannt, nur einseitig klappbar, so besteht die Gefahr, daß bei Versagen eines Teils des Klappmechanismus, beispielsweise aufgrund eines Defekts in eine einzigen Scharnier, der kostspielige Satellit letztlich nutzlos sein kann. Ist hingegen im

Falle der vorliegenden Erfindung eines der Gelenke defekt, so daß das ordnungsgemäße Entfalten nach der einen Alternative nicht mehr möglich ist, so kann noch nach der anderen Alternative entfaltet werden, wobei in diesem Fall das defekte Gelenk nicht beansprucht wird.

Nach der vorliegenden Erfindung lassen sich somit die einzelnen Elemente wahlweise nach der einen oder nach der anderen Alternative entfalten und wieder zusammenfalten, und zwar beliebig oft. Zum Auswählen der gewünschten Alternative muß beispielsweise lediglich das oberste Element des Stapels an einer der beiden Seiten gegriffen und in Entfaltungsrichtung gezogen werden, woraufhin sich das gesamte System nach der gewünschten Alternative entfaltet.

Die Schwenkachsen sind entlang gegenüberliegenden Seitenkanten der Elemente angeordnet, so daß die einzelnen Elemente um 180 Grad gegeneinander verschwenkt werden können; hierdurch ist gewährleistet, daß die einzelnen Elemente im entfalteten Zustand im wesentlichen in einer Ebene liegen können.

Vorzugsweise umfaßt die Kombination weiterhin Rasteinrichtungen, um die Elemente in ihrem zusammengeklappten und/oder entfalteten Zustand zu fixieren. Besonders vorteilhaft ist es hierbei, wenn die Rastkraft der Rasteinrichtungen von Element zu Element zunimmt oder abnimmt, so daß, insbesondere beim Öffnen bzw. Entfalten der Elemente, eine bestimmte Reihenfolge der Entfaltung der Elemente vorgegeben ist.

Die die einzelnen Elemente verbindenden Bänder können in bevorzugter Weiterbildung der Erfindung an ihren beiden Enden Scharniere tragen, die ihrerseits jeweils einen Befestigungslappen zum Befestigen des Scharniers am jeweiligen Element tragen. Der Stabilität der Vorrichtung ist es förderlich, wenn gemäß einem weiteren bevorzugten Merkmal der Erfindung jedes Bandsystem mindestens zwei erste und zwei zweite Bänder umfaßt und jeweils ein erstes und ein zweites Band paarweise angeordnet sind. Ein jedes Bandpaar wird dann in der Regel entlang der zwischen den Schwenkachsen gelegenen Randbereiche der Elemente verlaufen. Es versteht sich, daß je nach Anwendungsfall auch mehr als zwei Bandpaare vorgesehen sein können, wenn dies insbesondere aus Stabilitätsgründen zweckmäßig erscheint.

In vorteilhafter Weiterbildung der Erfindung ist vorgesehen, daß, im gefalteten Zustand der Elemente, jeweils ein erstes und ein zweites Band nebeneinanderliegend angeordnet sind, und daß die oben genannte Rasteinrichtung zwischen einander gegenüberliegenden Enden der entsprechenden Scharniere wirkt. Hierzu kann zweckmäßigerweise die Rasteinrichtung einen Kugelschnäpper umfassen, dessen Kugel in Richtung der Schwenkachse gegen Federkraft beweglich gelagert ist und der an einem der Scharniere befestigt ist, wobei die Kugel federnd in eine Rastvertiefung des axial gegenüberliegenden, anderen Scharniers eingreift. In weiterer Ausbildung der Erfindung kann die Rastvertiefung von der axialen Durchgangsöffnung eines im anderen Scharnier gehaltenen, ringförmigen Kugellagers definiert sein.

Bei einer solchen Anordnung werden die einzelnen Elemente sowohl in ihrer gefalteten als auch in ihrer um 180 Grad entfalteten Stellung gegeneinander verrastet. Weiterhin stützen sich die Scharniere gegenseitig ab, was insbesondere bei horizontaler Anordnung des Elementenstapels, also bei dem bevorzugten Anwendungsgebiet der Regale, von Bedeutung ist. Aufgrund des zusätzlichen Kugellagers ist weiterhin die Leichtgängigkeit beim Überführen der Elemente aus ihrer und in ihre Rastposition sichergestellt. Schließlich lassen sich die beiden Scharniere eines Scharnierpaars in ihrer verrasteten Position leicht gegeneinander drehen.

Die oben beschriebene Änderung der Rastkraft von Element zu Element kann im Falle der vorstehend beschriebenen Lösung auf einfache Weise dadurch realisiert werden, daß die Einrasttiefe der Rastkugel in die Rastvertiefung von Element zu Element variiert.

Im Falle der erfindungsgemäßen Verwendung des in Rede stehenden Entfaltungsprinzips im Zusammenhang mit Solarpanelen ist in bevorzugter Weiterbildung der Erfindung vorgesehen, daß beidseitig des Stapels gefalteter, aufeinanderliegender Solarpanele je ein in Entfaltungsrichtung ausfahrbarer Teleskopstab zum Entfalten der Solarpanele angeordnet ist, der jeweils mit einer der beiden Seiten des obersten Solarpanels des Stapels in Eingriff bringbar ist. Durch Aktivierung des einen oder des anderen Teleskopstabes können somit die Solarpanele nach der einen oder nach der anderen Alternative entfaltet werden. Ist eines der Gelenke oder einer der Teleskopstäbe defekt, so ist aufgrund der alternativen Entfaltungsmöglichkeit die Funktionsfähigkeit des Gesamtsystems nicht in Frage gestellt.

In bevorzugter Weiterbildung der Erfindung kann an den den Teleskopstäben zugewandten Seiten des obersten Solarpanels jeweils ein Mitnehmer ausgebildet sein, der beim Ausfahren des entsprechenden Teleskopstabes mit diesem in Eingriff kommt. Insbesondere kann der Mitnehmer als über die Seitenfläche des Solarpanels hinausragende Schlaufe ausgebildet sein und der Teleskopstab an seinem oberen Ende einen beim Ausfahren mit der Schlaufe in Eingriff kommenden, in Ausfahrrichtung geöffneten oder öffenbaren Haken aufweisen. Die Öffnung des Hakens kann weiterhin zumindest teilweise mittels eines einseitig freischwingend befestigten, flexiblen Elements wie beispielsweise eines Federbandes verschlossen sein, so daß beim Einfahren des Teleskopstabs über das flexible Element das oberste Solarpanel und damit auch die anderen Solarpanele mit nach unten in ihre gestapelte Ausgangsposition zurückbewegt werden, wobei bei dem weiteren Einfahren des Teleskopstabes die Schlaufe aufgrund der elastischen Deformation des flexiblen Elements außer Eingriff mit dem Haken des Teleskopstabes kommt.

Zweckmäßigerweise umfaßt die Kombination weiterhin eine Federeinrichtung, die bei ausgefahrenem Teleskopstab die entfalteten Solarpanele in ihre entfaltete Position vorspannt, wodurch auftretetende Toleranzen ausgeglichen werden können. Die Federeinrichtung kann beispielsweise dadurch gebildet werden, daß die Solarpanele in Richtung auf die sie tragende Basis, an der auch die Teleskopstäbe befestigt sind, vorgespannt sind, oder dadurch, daß das mit dem obersten Solarpanel in Eingriff kommende Ende der Teleskopstäbe federnd ausgebildet ist. Vorzugsweise ist jedoch vorgesehen, daß die Mitnehmer bzw. Schlaufen am obersten Solarpanel federnd gelagert und gegen Federkraft ausziehbar sind.

Um nach dem Entfalten der Solarpanele das Zusammenfalten in die Ausgangsposition zu fördern, sind gemäß einem weiteren Merkmal der Erfindung zwischen benachbarten Solarpanelen Federzug-Einrichtungen zum Überführen der entfalteten Solarpanele in ihre gefaltete Position vorgesehen. Zweckmäßigerweise umfaßt jede Federzug-Einrichtung zwei Federzüge, wobei jeweils ein Ende beider Federzüge etwa mittig zwischen den Schwenkachsen an einem Solarpanel befestigt ist bzw. angreift und die beiden anderen Enden jeweils an gegenüberliegenden Seitenendbereichen des gegenüberliegenden Solarpanels befestigt sind bzw. angreifen. Dieses Merkmal ist gegebenenfalls auch mit Vorteil bei anderen Anwendungsgebieten realisierbar.

Für den Einsatz im Zusammenhang mit künstlichen Satelliten können die Bänder nach einem weiteren Merkmal der Erfindung aus im wesentlichen dehnungsfestem, flexiblem und mehr oder weniger geschmeidigem elektrisch leitendem Material bestehen, beispielsweise aus Kupferlitzen, geflochtenen Kupferbändern o. dgl.. Aufgrund der Flexibilität des Materials erübrigen sich hierbei zusätzliche Scharniere. Die Bänder übernehmen in diesem Fall neben ihrer mechanischen Funktion auch noch die Funktion von leitenden Verbindungen zwischen den einzelnen Elementen sowie zwischen den Elementen und dem Satelliten.

Weitere Merkmale und Vorteile ergeben sich aus der nachfolgenden Beschreibung, in der mehrere Ausführungsbeispiele der Erfindung anhand der Zeichnung näher beschrieben sind. In der Zeichnung zeigen, größtenteils in stark schematisierter Darstellung:
Figur 1 eine Ansicht der erfindungsgemäßen Kombination, wobei sich die Elemente im zusammengefalteten Zustand befinden,
Figur 2 eine Teilansicht gemäß Figur 1, wobei die Elemente nach einer ersten Alternative entfaltet sind,
Figur 3 eine Teilansicht nach Figur 1, wobei die Elemente nach einer zweiten Alternative entfaltet sind,
Figur 4 eine perspektivische Ansicht eines weiteren Ausführungsbeispiels, bei dem der Elementenstapel zur Veranschaulichung der Anordnung der Bänder teilweise aufgeklappt ist,
Figur 5 eine Detailansicht der Bänder und Scharniere gemäß Ausführungsbeispiel nach Figur 4,
Figur 6 eine Seitenansicht eines weiteren Ausführungsbeispiels der Erfindung, wobei die Elemente als Solarpanele ausgebildet sind,
Figur 7 eine Draufsicht auf das oberste Element gemäß Ausführungsbeispiel nach Figur 6,
Figur 8 einen Schnitt durch eine Schlaufenhalterung des Elements nach Figur 7, und
Figur 9 eine Teilansicht eines weiteren Ausführungsbeispiels mit zusätzlichen Federzug-Einrichtungen.

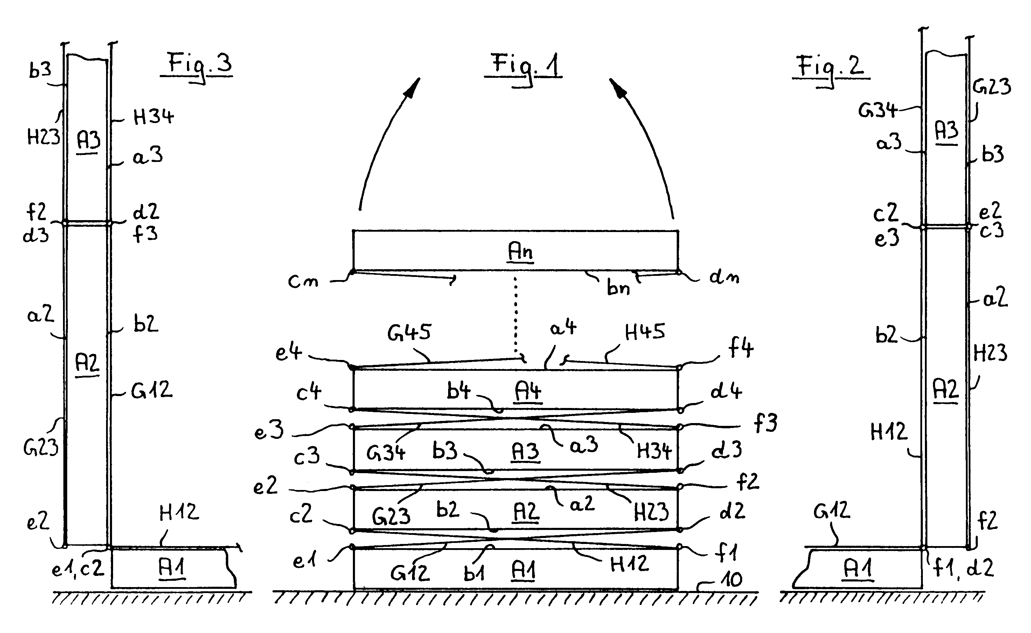

Zunächst wird auf das Ausführungsbeispiel gemäß Figur 1 Bezug genommen. Mit den Bezugsziffern A1, A2, A3, A4, ... An sind jeweils im wesentlichen gleich ausgebildete Elemente bezeichnet. Die Elemente liegen - entgegen der Darstellung in Figur 1 - aufeinander auf bzw. aneinander an. Die Darstellung gemäß Figur 1, bei der die einzelnen Elemente voneinander beabstandet sind, wurde lediglich zum Zwecke der Verdeutlichung gewählt, um die die einzelnen Elemente untereinander verbindenden Bänder bzw. Bandsysteme deutlicher darstellen zu können.

An jedem Element A2, A3, A4 ..., gegebenenfalls mit Ausnahme des untersten Elements A1 und des obersten Elements An, sind vier Schwenkachsen c2, d2, e2, f2; c3, d3, e3, f3; c4, d4, e4, f4 ... definiert, wobei alle diese Schwenkachsen parallel und in der Darstellung gemäß Figur 1 senkrecht zur Zeichenebene verlaufen. Die genannten Schwenkachsen liegen an den entsprechenden äußeren, senkrecht zur Zeichenebene gemäß Figur 1 verlaufenden Kanten der Elemente.

Am unteren Element A1 sind im Bereich der oberen, dem Element A2 zugewandten Seitenkanten Schwenkachsen e1 und f1 definiert, am obersten Element An sind an den unteren Kanten Schwenkachsen cn und dn definiert.

Liegen - entgegen der Darstellung gemäß Figur 1 - die einzelnen Elemente aufeinander auf, so ist ersichtlich, daß die Schwenkachsen e1, c2; f1, d2; e2, c3; f2, d3; e3, c4; f3, d4 ... usw. zusammenfallen, d.h. fluchten. Dieses Fluchten der genannten Schwenkachsen ist für die Funktionsfähigkeit der erfindungsgemäßen Vorrichtung von ausschlaggebender Bedeutung. Zwar können im Einzelfall kleinere Abweichungen von der genannten Fluchtung gegebenenfalls noch akzeptiert werden, die optimale Funktionsfähigkeit ergibt sich jedoch stets bei genauer Fluchtung, so daß im folgenden stets von diesem optimalen Fall ausgegangen wird.

Zwischen den einzelnen Elementen A1, A2, A3 ... sind Bänder bzw. Bandsysteme G, H vorgesehen, welche die Elemente untereinander verbinden. Zwischen je zwei benachbarten Elementen, z.B. A1, A2 oder A2, A3 sind jeweils zwei gegenläufige Bänder oder Bandsysteme, nämlich G12, H12 bzw. G23, H23 usw. vorgesehen. Jedes Band ist an seinen beiden Enden an unterschiedlichen Elementen befestigt und um die entsprechenden Schwenkachsen schwenkbar gelagert.

Im einzelnen ist das Sand G12 in der Darstellung gemäß Figur 1 an seinem linken Ende am Element A1 um die Schwenkachse e1 schwenkbar befestigt und an seinem rechten Ende um die Schwenkachse d2 am Element A2, wohingegen das Band H12 an seinem linken Ende am Element A2 um die Schwenkachse c2 schwenkbar befestigt ist und an seinem rechten Ende um die Schwenkachse f1 schwenkbar am Element A1 befestigt ist. Entsprechend kreuzweise und gegenläufig sind die Bänder G23, H23 zwischen den Elementen A2 und A3, die Bänder G34, H34 zwischen den Elementen A3 und A4 usw. angeordnet.

Aus dem Vorstehenden ergibt sich, daß jedes Element gegenüber dem benachbarten Element entweder um die linke oder um die rechte gemeinsame Achse verschwenkt werden kann; beispielsweise kann das Element A2 gegenüber dem Element A1 entweder um die gemeinsame rechte Schwenkachse f1, d2 oder um die gemeinsame linke Schwenkachse e1, c2 verschwenkt werden.

Figuren 2 und 3 verdeutlichen die beiden Alternativen der Entfaltung des Elementenstapels gemäß Figur 1. Im Falle der Entfaltung nach Figur 2 wurden die Elemente um die Schwenkachsen f1, d2; e2, c3; f3, d4 ... usw. verschwenkt, während im Falle der Figur 3 die Elemente um die Schwenkachsen e1, c2; f2, d3; e3, c4 ... usw. verschwenkt wurden.

Aus der Darstellung gemaß Figuren 2 und 3 wird auch deutlich, daß im Falle der beiden Alternativen die Elemente jeweils unterschiedlich ausgerichtet sind; während im Falle von Figur 3 die Flächen a2, b3, a4 ... in der gewählten Darstellung nach rechts weisen, sind dies im Falle der Alternative nach Figur 3 die Flächen b2, a3, b4 ... usw.

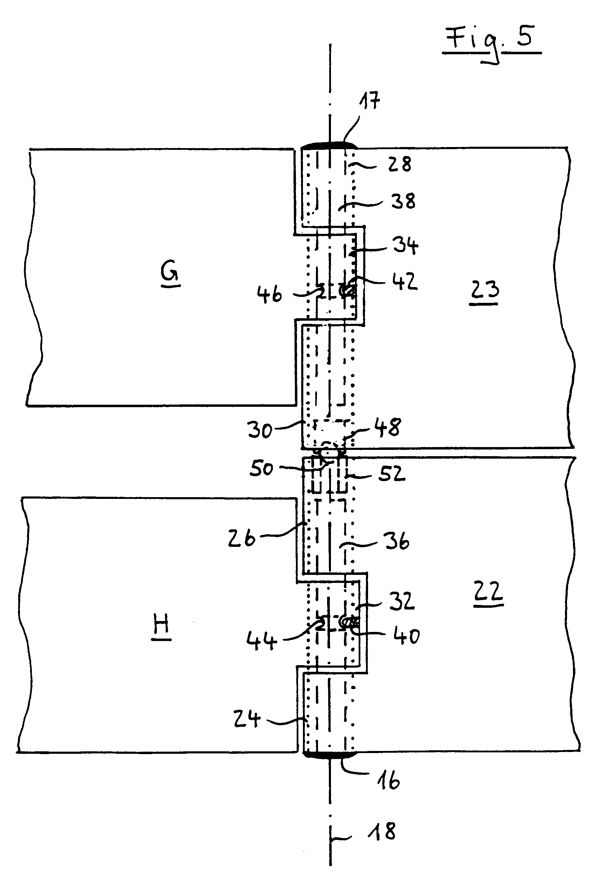

Aus Figuren 2 und 3 wird auch deutlich, daß im um 180 Grad entfalteten Zustand der Elemente Achsen, die im gefalteten Zustand beabstandet waren, nunmehr fluchten, so z.B. die Achsen c2 und e3 im Falle der Figur 2 oder die Achsen d2 und f3 im Falle der Figur 3. Dieser Umstand kann ausgenutzt werden, um im entfalteten Zustand Rastpositionen zu definieren, wie weiter unten insbesondere im Zusammenhang mit Figur 5 noch näher beschrieben werden wird.

Während im Falle der schematischen Darstellung gemäß Figuren 1 bis 3 davon ausgegangen wurde, daß das unterste Element A1 an einer Basis 10 starr fixiert ist, im Falle eines Regals also beispielsweise an einer vertikalen Wand oder im Falle von Solarpanelen beispielsweise am Boden eines Transportbehälters, versteht es sich, daß das unterste Element A1 an der Basis 10 auch über ein Bandpaar schwenkbar befestigt sein kann.

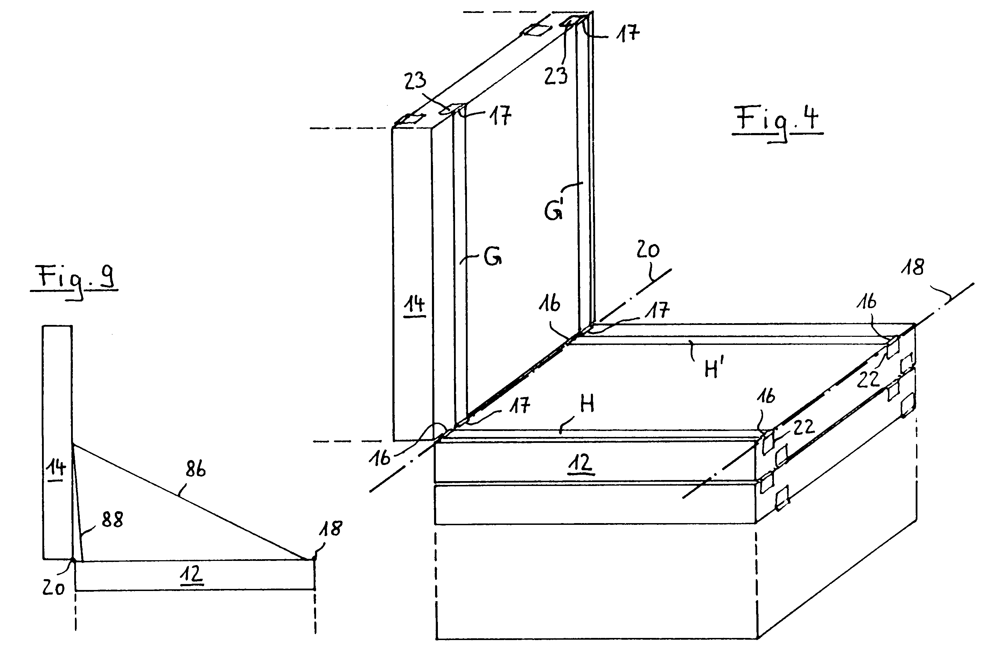

Es wird nunmehr auf Figur 4 Bezug genommen und der Verlauf der Bänder am Beispiel der zwischen den Elementen 12 und 14 angeordneten Bändern beschrieben. Die Anordnung der Bänder zwischen den anderen Elementen ist dementsprechend.

Es sind insgesamt vier Bänder H, H', G und G' vorgesehen, die paarweise entlang den Seitenrandbereichen der Elemente 12, 14 angeordnet sind, d.h. an einem Seitenrandbereich sind die Bänder H, G und am anderen Seitenrandbereich die Bänder H', G' angeordnet. An den beiden Enden der Bänder G bzw. H sind Scharniere 17 bzw. 16 ausgebildet, deren Achsen (im gefalteten Zustand der Elemente) mit den Schwenkachsen 18 bzw. 20 fluchten. An den den Bändern abgewandten Seiten der Scharniere 16 bzw. 17 sind Scharnierlappen 22 bzw. 23 ausgebildet, die zur Befestigung der Scharniere an den einzelnen Elementen dienen.

Die Bänder G, G' sind um die in der Darstellung gemäß Figur 4 links liegende Achse 20 schwenkbar am unteren Element 12 befestigt und an ihren anderen Enden an der gegenüberliegenden Seite des oberen Elements 14. Demgegenüber sind die Bänder H, H' um die rechte Schwenkachse 18 schwenkbar am unteren Element 12 und um die linke Achse 20 schwenkbar am oberen Element 14 befestigt. Die Bänder H, G bzw. H', G' sind eng nebeneinanderliegend angeordnet, derart, daß im gefalteten Zustand der Elemente - sowie im um 180 Grad entfalteten Zustand der Elemente - die Scharniere koaxial unter nur einem geringen Abstand gegenüberliegen, so daß die zwischen den Scharnieren vorgesehene Rasteinrichtung wirksam werden kann, wie im folgenden anhand von Figur 5 beschrieben wird.

Figur 5 zeigt die Anordnung der Scharniere bei in gefalteter oder in vollständig entfalteter Position befindlichen Elementen. Die Bänder G, H sind nebeneinanderliegend in einer Ebene angeordnet. Die Scharniere 16, 17 fluchten axial. Die Scharnierlappen 22, 23 sind in der Darstellung nach Figur 5 lediglich zur Vereinfachung der Darstellung als beide nach rechts weisend dargestellt, tatsächlich sind sie jedoch beide senkrecht zur Zeichenebene in entgegengesetzte Richtungen koplanar ausgerichtet und an unterschiedlichen, benachbarten Elementen befestigt.

Die Scharniere 16 und 17 der Bänder H bzw. G sind jeweils im wesentlichen gleich aufgebaut. Im Falle des Ausführungsbeispiels umfassen die Scharniere 16, 17 jeweils zwei mit den Scharnierlappen 22 bzw. 23 einstückig verbundene, eingerollte Ösen 24, 26 bzw. 28, 30, zwischen die jeweils eine eingerollte Öse 32 bzw. 34 eingreift, die mit dem jeweiligen Band H bzw. G einstückig verbunden ist. In den Ösen sind Scharnierstifte 36 bzw. 38 geführt, die mittels Madenschrauben 40 bzw. 42, die in jeweils eine Nut 44 bzw. 46 des Scharnierstiftes eingreifen, in ihrer Position fixiert sind.

In das dem Scharnier 16 zugewandte Ende der eingerollten Öse 30 ist ein Kugelschnäpper 48 befestigt, beispielsweise eingeschraubt, eingepreßt oder mittels Madenschraube fixiert, dessen Kugel 50 in Richtung der Schwenkachse 18 federnd gelagert und in Richtung zum Scharnier 16 hin vorgespannt ist. In dem dem Scharnier 17 zugewandten Ende der eingerollten Öse 26 ist ein ringförmiges Kugellager 52 befestigt, also beispielsweise eingeschraubt, eingepreßt oder mittels Madenschraube fixiert, dessen zentrale Öffnung koaxial zur Schwenkachse 18 ausgerichtet ist. Die zentrale Öffnung des Kugellagers 52 dient als Rastvertiefung für die Kugel 50 des Kugelschnäppers 48. Weiterhin dient das ringförmige Kugellager 52 als Auflager für das Scharnier 17 bzw. für das dem Kugellager 52 zugewandte Ende des Gehäuses des Kugelschnäppers 48.

Die Rastkraft zwischen Kugelschnäpper und Kugellager nimmt von Element zu Element zu. Zu diesem Zweck kann entweder die Federvorspannung der Rastkugel entsprechend modifiziert werden oder aber es wird, beispielsweise mittels eines koaxial zur Schwenkachse 18 angeordneten, in Axialrichtung verstellbaren Stiftes die Rasttiefe der Kugel 50 in der zentralen Durchgangsöffnung des Kugellagers 52 entsprechend variiert.

Das Kugellager 52 des Scharniers 16 bildet somit im Zusammenwirken mit dem Kugelschnäpper 48 des Scharniers 17 ein leicht drehbares Auflager für das Scharnier 17 und definiert gleichzeitig eine Rastposition. Bei geschlossenen Elementen muß zum Öffnen eines Elements lediglich auf eine entsprechende seitliche Kante ein Zug ausgeübt werden, der die Federkraft des Kugelschnäppers übersteigt, während auf der anderen Seite Kugelschnäpper und Kugellager in ihrer gegenseitigen Eingriffsposition verbleiben und ein leicht drehbares Lager bzw. Auflager bilden. Bei an einer Wand befestigten Regalelementen wird damit das Abkippen der geöffneten Elemente nach vorne verhindert. Die unterschiedliche Rastkraft der einzelnen Kugelschnäpper stellt ein geordnetes Entfalten der einzelnen Elemente sicher.

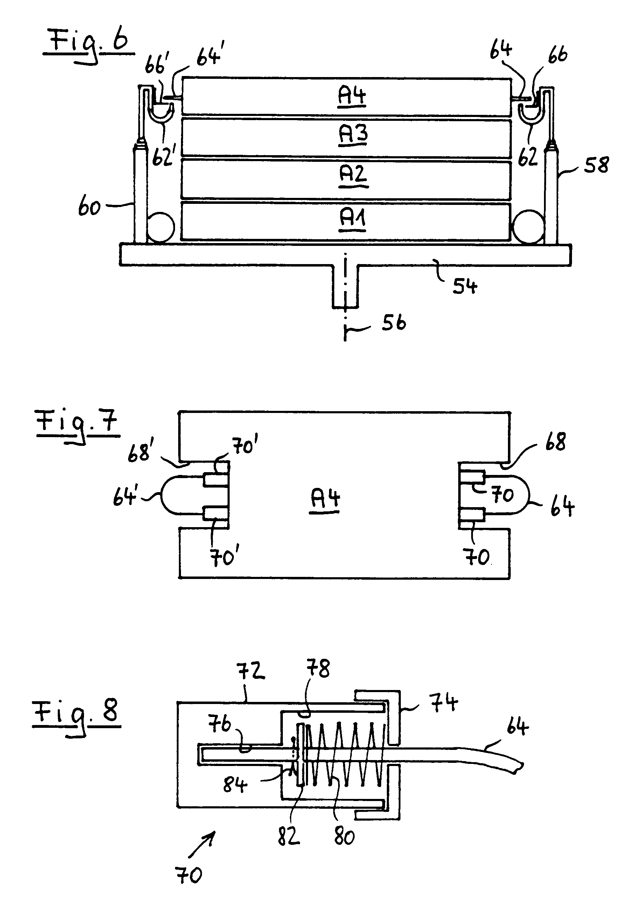

Es wird nunmehr auf das Ausführungsbeispiel gemäß Figuren 6 bis 8 Bezug genommen. Bei den Elementen A1 bis A4 handelt es sich um Solarpanele, die nach dem anhand der Figuren 1 bis 3 geschilderten Prinzip entfaltbar und wieder zusammenfaltbar sind. Der Stapel aus Solarpanelen A1 bis A4 ist auf einem Drehteller 54 gehalten, der um eine Achse 56 mittels eines geeigneten, an sich bekannten und daher nicht näher beschriebenen Antriebs rotiert werden kann. Auf dem Drehteller 54 sind weiterhin zwei Teleskopstäbe 58, 60, in der Fachsprache auch "Boom" genannt, befestigt, und zwar an gegenüberliegenden Seiten des Elementenstapels. Die Teleskopstäbe 58, 60 sind parallel zur Drehachse 56, also senkrecht zur Oberfläche der aktiven Flächen der Solarpanele, ausfahrbar. Der Antrieb der Teleskopstäbe erfolgt elektrisch, kann je nach Gegebenheit jedoch auch pneumatisch oder hydraulisch erfolgen, und ist mit einer automatischen Endabschaltung versehen.

An der Spitze der Teleskopstäbe 58, 60 ist je ein halbrunder, in Ausfahrtrichtung offener Haken 62 angebracht, der beim Ausfahren mit einer am obersten Element A4 ausgebildeten Schlaufe 64 in Eingriff kommt und hierdurch beim Ausfahren des Teleskopstabs ein Entfalten der Solarpanele bewirkt.

Nachdem im Weltraum ein selbsttätiges Zusammenfalten der entfalteten Solarpanele aufgrund Schwerkraft nicht möglich ist, sollten Maßnahmen vorgenommen werden, die ein Falten der Elemente zurück in die Ausgangsposition ermöglichen. Zu diesem Zweck ist beim Ausführungsbeispiel gemäß Figur 6 am Haken 62 ein flexibles Stahlband 66 vorgesehen, welches am Haken 62 mit seinem einen Ende frei schwingend befestigt ist und die Öffnung des Hakens im wesentlichen überdeckt. Beim Ausfahren des Teleskopstabes gleitet die Schlaufe 64 unter Verformung des Stahlbandes 66 auf den Grund des Hakens, woraufhin beim weiteren Ausfahren des Teleskopstabes das oberste Element A4 angehoben wird und der Entfaltungsvorgang beginnt. Beim Einfahren des Teleskopstabes verhindert das Stahlband 66 zunächst ein Herausgleiten der Schlaufe 64 aus dem Haken 62, so daß die Elemente ziehharmonikaförmig zusammengefaltet werden. Nach Abschluß des Vorgangs des Zusammenfaltens wird der Teleskopstab noch weiter eingefahren, bis die Schlaufe 64 wieder unter Verformung des Stahlbandes 66 aus dem Haken 62 herausgleitet. Für die beiden Endpositionen des Teleskopstabes sind Endabschaltungen vorgesehen, wobei die Endabschaltung bei ausgefahrenem Teleskopstab dann in Kraft tritt, wenn die Elemente vollständig entfaltet und unter Federspannung straff gehalten werden.

Figur 7 zeigt eine Draufsicht auf das oberste Solarpanel A4. Das Solarpanel A4 weist seitliche Aussparungen 68, 68' auf, an deren Grund je zwei Haltebuchsen 70, 70' befestigt sind, in denen die beiden Enden der Schlaufe 64, 64' federnd gehalten werden, wie dies im einzelnen in Figur 8 dargestellt ist. Jede Haltebuchse 70 umfaßt einen Buchsenkörper 72 mit aufgeschraubtem Deckel 74. In einer ersten zentralen Bohrung 76 des Buchsenkörpers 72, die dem Deckel 74 abgewandt ist und einen Durchmesser aufweist, der etwas größer ist als der Durchmesser des Materials der Schlaufe 64, ist das Schlaufenende geführt. An die erste Bohrung 76 schließt sich eine zweite Bohrung 78 mit wesentlich größerem Durchmesser an, die bis zum Deckel 74 reicht. In der Bohrung 78 ist, auf die Schlaufe 64 aufgeschoben, eine Schraubenfeder 80 und hieran anschließend eine Beilagscheibe 82 angeordnet, die an der dem Deckel 74 abgewandten Seite beispielsweise mittels eines Splints 84 abgestützt ist. Auf diese Weise wird bei Vorhandensein eines entsprechenden, auf die Schlaufe wirkenden Zugs ein federndes Ausziehen der Schlaufe 64 aus den Haltebuchsen 70 möglich, so daß, bei vollständig ausgefahrenem Teleskopstab, die Elemente unter Vorspannung in ihrer entfalteten Position gehalten werden.

Im vollständig entfalteten Zustand der Solarpanele liegt das Solarpanel A4 mit einem seiner beiden Seitenflächen auf der Seitenfläche des darunterliegenden Solarpanels auf. Die flexible Schlaufe 64 oder 64' wird hierbei in die entsprechende Ausnehmung 68 oder 68' unter Deformation hineingedrückt und ist somit beim Entfalten nicht hinderlich. Eine alternative Lösung bei starrem Mitnehmerelement besteht darin, auch in dem darunterliegenden Solarpanel A3 die erforderlichen Aussparungen vorzunehmen.

Wenn nun beispielsweise bei einem künstlichen Satelliten aufgrund eines Fehlers an einem Teleskopstab oder an einer Schwenkachse die Elemente nicht an der gewünschten Seite entfaltet werden können, so kann der andere Teleskopstab in Funktion treten und die Entfaltung an der anderen Seite erfolgen. Damit die Solarpanele im entfalteten Zustand nach der gewünschten Seite ausgerichtet werden können, sind die Elemente im Falle des Ausführungsbeispiels in an sich bekannter Weise auf einem Drehteller angeordnet, der mittels eines geeigneten, insbesondere elektrischen Antriebs um mindestens 180 Grad drehbar ist. Die Drehung des Drehtellers kann elektromotorisch oder gegebenenfalls auch beispielsweise mittels einer Seilzugeinrichtung, die über den ausfahrenden Teleskopstab betätigt wird, erfolgen. Weiterhin kann in an sich bekannter Weise eine Sonnennachlaufsteuerung für den Drehteller vorgesehen sein. Der Drehteller kann mittels bekannter Verriegelungs- oder Rasteinrichtungen in seiner Sollposition lösbar fixierbar sein.

Für den Einsatz an künstlichen Satelliten können die die einzelnen Solarelemente verbindenden Bänder aus elektrisch gut leitendem, flexiblem, aber in der Länge wenig veränderlichem Material, z.B. aus Kupferlitzen, geflochtenen Kupferbändern o. dgl. bestehen. Die Bänder übernehmen dann auch die Funktion von leitenden Verbindungen sowohl zwischen den einzelnen Solarpanelen als auch zwischen diesen und dem Satelliten.

Nach einem weiteren Ausführungsbeispiel, welches schematisch in Figur 9 skizziert ist, können zwischen den einzelnen Elementen, also beispielsweise zwischen den Elementen 12 und 14 in Figur 9, Federzug-Einrichtungen vorgesehen sein, welche das Zusammenfalten der Elemente in die gefaltete Ausgangsposition bewirken bzw. unterstützen. Im Falle dieses Ausführungsbeispiels gemäß Figur 9 umfaßt die Federzug-Einrichtung zwei Federzüge 86, 88, wobei die beiden oberen Enden der Federzüge mittig am Element 14 angreifen und die beiden anderen Enden jeweils randseitig im Bereich der gegenüberliegenden Schwenkachsen des Elements 12. Die Federzüge 86, 88 können beispielsweise Schraubenfedern sein, die im zusammengeklappten Zustand der Elemente in geeigneten, in den Oberflächen der Elemente vorgesehenen Nuten liegen; die Federzüge 86, 88 können jedoch auch von Seilen gebildet werden, die auf im Inneren der Elemente angeordneten, federgespannten Rollen aufwickelbar sind; dem Fachmann stehen hierfür diverse Lösungen zur Verfügung. Anstatt die Federzüge 86, 88 zwischen den einzelnen Elementen anzuordnen, können sie auch randseitig neben den Elementen befestigt sein, in diesem Falle vorzugsweise beidseitig.

## Patentansprüche

1. Kombination einer Mehrzahl von untereinander paarweise verbundenen Elementen (A1, A2, ... An), die aus einem gefalteten Zustand, in dem die Elemente aneinanderliegend angeordnet sind, in einen zumindest teilweise entfalteten Zustand überführbar sind, mit einer Einrichtung zum Ermöglichen des Überführens der Elemente von dem gefalteten in dem zumindest teilweise entfalteten Zustand, wobei benachbarte Elemente (A1, A2; A2, A3 ...; 12, 14) um eine gemeinsame Schwenkachse gegeneinander verschwenkbar sind und jedes Element vier zur Schwenkachse parallele Seitenkanten aufweist,
dadurch gekennzeichnet,
daß jedes Paar benachbarter Elemente (A1, A2; A2, A3 ...; 12, 14) im gefalteten Zustand zwei parallele Schwenkachsen (e1 bzw. c2, f1 bzw. d2; ...; 18, 20) aufweist,
daß die Schwenkachsen (e1, f1, c2, d2, e2, f2, c3, d3, e3, f3 ...; 18, 20) entlang gegenüberliegender Seitenkanten der Elemente (A1, A2, A3 ...; 12, 14) angeordnet sind, und
daß jedes Element (z.B. A1; 12) mit dem benachbarten Element (z.B. A2; 14) durch zwei Bänder (G12, H12) bzw. Bandsysteme (G, G'; H, H') verbunden ist, wobei
ein erstes Band (G12) bzw. Bandsystem (G, G') an seinem einen Ende um die eine Schwenkachse (e1, 20) schwenkbar an dem einen Element (A1; 12) und an seinem anderen Ende um die andere Schwenkachse (d2; 18) schwenkbar an dem anderen Element (A2; 14) befestigt ist und
das zweite Band (H12) bzw. Bandsystem (H, H') an seinem einen Ende um die eine Schwenkachse (c2; 20) schwenkbar an dem anderen Element (A2; 14) und an seinem anderen Ende um die andere Schwenkachse (f1; 18) schwenkbar an dem einen Element (A1; 12) befestigt ist.

2. Kombination nach Anspruch 1, dadurch gekennzeichnet, daß sie Rasteinrichtungen (48, 52) umfaßt, um die Elemente (A1, A2, A3 ...; 12, 14) in ihrem zusammengeklappten und/oder entfalteten Zustand zu fixieren.

3. Kombination nach Anspruch 2, dadurch gekennzeichnet, daß die Rastkraft der Rasteinrichtungen (48, 52) von Element zu Element zunimmt oder abnimmt.

4. Kombination nach einem der vorhergehenden Ansprüche, dadurch gekennzeichnet, daß die Bänder (G, G'; H, H') an ihren beiden Enden Scharniere (16; 17) tragen, die ihrerseits jeweils einen Befestigungslappen (22; 23) zum Befestigen des Scharniers am jeweiligen Element tragen.

5. Kombination nach einem der vorhergehenden Ansprüche, dadurch gekennzeichnet, daß jedes Bandsystem (G, G', H, H') mindestens zwei erste (G, G') und zwei zweite Bänder (H, H') umfaßt und jeweils ein erstes und ein zweites Band (G, H; G', H') paarweise angeordnet sind.

6. Kombination nach Anspruch 2 und Anspruch 4, dadurch gekennzeichnet, daß, im gefalteten Zustand der Elemente, jeweils ein erstes und ein zweites Band (G, H; G', H') nebeneinanderliegend angeordnet sind und daß die Rasteinrichtung (48, 52) zwischen einander axial gegenüberliegenden Enden der entsprechenden Scharniere (17, 16) wirkt.

7. Kombination nach Anspruch 6, dadurch gekennzeichnet, daß die Rasteinrichtung (48, 50) einen Kugelschnäpper (48) unfaßt, dessen Kugel (50) in Richtung der Schwenkachse (18) gegen Federkraft beweglich gelagert ist und der an einem der Scharniere (17) befestigt ist, wobei die Kugel (50) federnd in eine Rastvertiefung des axial gegenüberliegenden, anderen Scharniers (16) eingreift.

8. Kombination nach Anspruch 3 und Anspruch 7, dadurch gekennzeichnet, daß die Rasttiefe der Rastvertiefung von Element zu Element zunimmt oder abnimmt.

9. Kombination nach Anspruch 7, dadurch gekennzeichnet, daß die Rastvertiefung von der axialen Durchgangsöffnung eines im anderen Scharnier (16) gehaltenen, ringförmigen Kugellagers (52) definiert ist.

10. Kombination nach einem der vorhergehenden Ansprüche, dadurch gekennzeichnet, daß die Elemente (A1, A2, A3, A4) Solarpanele sind.

11. Kombination nach Anspruch 10, dadurch gekennzeichnet, daß beidseitig des Stapels gefalteter, aufeinanderliegender Solarpanele (A1 ... A4) je ein in Entfaltungsrichtung ausfahrbarer Teleskopstab (58, 60) zum Entfalten der Solarpanele angeordnet ist, der jeweils mit einer der beiden Seiten des obersten Solarpanels (A4) des Stapels in Eingriff bringbar ist.

12. Kombination nach Anspruch 11, dadurch gekennzeichnet, daß an den den Teleskopstäben (58, 60) zugewandten Seiten des obersten Solarpanels (A4) jeweils ein Mitnehmer (64, 64') ausgebildet ist, der beim Ausfahren des entsprechenden Teleskopstabes mit diesem in Eingriff kommt.

13. Kombination nach Anspruch 12, dadurch gekennzeichnet, daß der Mitnehmer als über die Seitenfläche des Solarpanels (A4) hinausragende Schlaufe (64, 64') ausgebildet ist und der Teleskopstab (58, 60) an seinem oberen Ende einen beim Ausfahren mit der Schlaufe (64, 64') in Eingriff kommenden, in Ausfahrrichtung geöffneten oder öffenbaren Haken (62, 62') aufweist.

14. Kombination nach Anspruch 13, dadurch gekennzeichnet, daß die Öffnung des Hakens (62, 62') zumindest teilweise mittels eines einseitig freischwingend befestigten, flexiblen Elements (66, 66') verschlossen ist.

15. Kombination nach einem der Ansprüche 11 bis 14, dadurch gekennzeichnet, daß eine Federeinrichtung (70, 70') vorgesehen ist, die bei ausgefahrenem Teleskopstab die entfalteten Solarpanele in ihre entfaltete Position vorspannt.

16. Kombination nach Anspruch 13 und 15, dadurch gekennzeichnet, daß die Mitnehmer bzw. Schlaufen (64, 64') federnd gelagert und gegen Federkraft ausziehbar sind.

17. Kombination nach einem der Ansprüche 10 bis 16, dadurch gekennzeichnet, daß zwischen benachbarten Solarpanelen (z.B. 12, 14) Federzug-Einrichtungen (86, 88) zum Überführen der entfalteten Solarpanele in ihre gefaltete Position vorgesehen sind.

18. Kombination nach Anspruch 17, dadurch gekennzeichnet, daß jede Federzug-Einrichtung zwei Federzüge (86, 88) umfaßt, wobei die einen Enden der beiden Federzüge etwa mittig zwischen den Schwenkachsen (18, 20) an einem Solarpanel (14) befestigt sind bzw. angreifen und die beiden anderen Enden jeweils an gegenüberliegenden Seitenendbereichen des anderen Solarpanels (12) befestigt sind bzw. angreifen.

19. Kombination nach einem der Ansprüche 10 bis 18, dadurch gekennzeichnet, daß die Bänder (G12, H12, G23, H23 ...) aus dehnungsfestem, flexiblem und geschmeidigem elektrisch leitendem Material sind.

20. Kombination nach einem der Ansprüche 1-9, dadurch gekennzeichnet, daß die Elemente Regalelemente sind.

## Claims

1. Combination of a plurality of elements (A1, A2, ... An), which are interconnected in pairs and are transferable from a folded state, in which the elements are disposed contiguously, into an at least partially unfolded state, having a device for enabling the transfer of the elements from the folded into the at least partially unfolded state, adjacent elements (A1, A2; A2, A3 ...; 12, 14) being capable of swivelling relative to one another about a common swivelling axis and each element having four side edges parallel to the swivelling axis,
characterized in that
each pair of adjacent elements (A1, A2; A2, A3 ...; 12, 14) in the folded state has two parallel swivelling axes (e1 and c2, f1 and d2; ...; 18, 20),
that the swivelling axes (e1, f1, c2, d2, e2, f2, c3, d3, e3, f3 ...; 18, 20) are disposed along opposite side edges of the elements (A1, A2, A3 ...; 12, 14), and that each element (e.g. A1; 12) is connected to the adjacent element (e.g. A2; 14) by two bands (G12, H12) or band systems (G, G'; H, H'),
a first band (G12) or band system (G, G') being fastened at its one end to the one element (A1; 12) so as to be capable of swivelling about the one swivelling axis (e1, 20) and at its other end to the other element (A2; 14) so as to be capable of swivelling about the other swivelling axis (d2; 18) and
the second band (H12) or band system (H, H') being fastened at its one end to the other element (A2; 14) so as to be capable of swivelling about the one swivelling axis (c2; 20) and at its other end to the one element (A1; 12) so as to be capable of swivelling about the other swivelling axis (f1; 18).

2. Combination according to claim 1, characterized in that it comprises detent devices (48, 52) for fixing the elements (A1, A2, A3...; 12, 14) in their folded-up and/or unfolded state.

3. Combination according to claim 2, characterized in that the detent force of the detent devices (48, 52) increases or decreases from element to element.

4. Combination according to one of the preceding claims, characterized in that the bands (G, G'; H, H') at their two ends carry hinges (16; 17), which in turn each carry a fastening tab (22, 23) for fastening the hinge to the respective element.

5. Combination according to one of the preceding claims, characterized in that each band system (G, G'; H, H') comprises at least two first bands (G, G') and two second bands (H, H') and in each case a first and a second band (G, H; G', H') are disposed in pairs.

6. Combination according to claim 2 and claim 4, characterized in that, in the folded state of the elements, in each case a first and a second band (G, H; G', H') are disposed alongside one another and that the detent device (48, 52) operates between axially opposite ends of the corresponding hinges (17, 16).

7. Combination according to claim 6, characterized in that the detent device (48, 50) comprises a ball catch (48), whose ball (50) is supported so as to be movable counter to spring action in the direction of the swivelling axis (18) and which is fastened to one of the hinges (17), the ball (50) springing into a detent recess in the axially opposite, other hinge (16).

8. Combination according to claim 3 and claim 7, characterized in that the detent depth of the detent recess increases or decreases from element to element.

9. Combination according to claim 7, characterized in that the detent recess is defined by the axial through opening of an annular ball bearing (52) held in the other hinge (16).

10. Combination according to one of the preceding claims, characterized in that the elements (A1, A2, A3, A4) are solar panels.

11. Combination according to claim 10, characterized in that disposed on either side of the stack of folded, superimposed solar panels (A1 ... A4) is a telescopic rod (58, 60) which may be extended in unfolding direction for unfolding the solar panels and which may be brought into engagement with a respective one of the two sides of the top solar panel (A4) of the stack.

12. Combination according to claim 11, characterized in that a driver (64, 64') is constructed at each of the sides of the top solar panel (A4) facing the telescopic rods (58, 60), said driver upon extension of the corresponding telescopic rod coming into engagement with said rod.

13. Combination according to claim 12, characterized in that the driver takes the form of a loop (64, 64') projecting from the side surface of the solar panel (A4) and the telescopic rod (58, 60) has at its top end a hook (62, 62'), which is open or openable in the direction of extension and upon extension comes into engagement with the loop (64, 64').

14. Combination according to claim 13, characterized in that the opening of the hook (62, 62') is closed at least partially by means of a flexible element (66, 66'), which is fastened at one end so as to be free-swinging.

15. Combination according to one of claims 11 to 14, characterized in that a spring device (70, 70') is provided which, when the telescopic rod is extended, preloads the unfolded solar panels into their unfolded position.

16. Combination according to claim 13 and 15, characterized in that the drivers or loops (64, 64') are spring-mounted and are extendable counter to spring action.

17. Combination according to one of claims 10 to 16, characterized in that spring tension devices (86, 88) are provided between adjacent solar panels (e.g. 12, 14) for transferring the unfolded solar panels into their folded position.

18. Combination according to claim 17, characterized in that each spring tension device comprises two tension springs (86, 88), the one ends of the two tension springs being fastened or acting substantially midway between the swivelling axes (18, 20) on one solar panel (14) and the other two ends each being fastened or acting on opposite side end regions of the other solar panel (12).

19. Combination according to one of claims 10 to 18, characterized in that the bands (G12, H12, G23, H23 ...) are made of extension-resistant, flexible and ductile, electrically conductive material.

20. Combination according to one of claims 1 to 9, characterized in that the elements are shelf elements.

## Revendications

1. Combinaison de plusieurs éléments reliés deux à deux (A1, A2, ... An) qui, partant d'un état plié dans lequel les éléments sont disposés côte à côte, peuvent être déployés au moins partiellement, avec un dispositif rendant possible le déploiement au moins partiel des éléments pliés, des éléments voisins (A1, A2, A3... ; 12, 14) pouvant pivoter l'un vers l'autre autour d'un axe de pivotement commun, et chaque élément présentant quatre bords parallèles à l'axe de pivotement,
caractérisée en ce que
chaque paire d'éléments voisins (A1, A2, A3... ; 12, 14) présente dans l'état plié deux axes de pivotement parallèles (e1, respectivement c2, f1 respectivement d2 ; ... ; 18, 20),
que les axes de pivotement (e1, f1, c2, d2, e2, f2, c3, d3, e3, f3... ; 18, 20) sont disposés le long des bords latéraux se faisant face des éléments (A1, A2, A3... ; 12, 14), et
que chaque élément (par exemple A1 ; 12) est relié à l'élément voisin ((par exemple A2 ; 14) par deux bandes (G12, H12), respectivement deux systèmes à bande (G, G', H, H'), où
une première bande (G12), respectivement un premier système à bande (G, G'), est fixée à l'une de ses extrémités à cet élément (A1 ; 12) autour de l'axe (e1 ; 20) de manière à pouvoir pivoter, et à son autre extrémité est fixée à l'autre élément (A2 ; 14) autour de l'autre axe (d2 ; 18) de manière à pouvoir pivoter, et la deuxième bande (H12), respectivement le deuxième système à bande (H, H'), est fixée à l'une de ses extrémités à l'autre élément (A2 ; 14) autour de l'axe (c2 ; 20) de manière à pouvoir pivoter et à son autre extrémité est fixée à l'élément (A1 ; 12) autour de l'autre axe (f1 ; 18) de manière à pouvoir pivoter.

2. Combinaison selon la revendication 1, caractérisée en ce qu'elle comprend des dispositifs d'encliquetage (48, 52), pour fixer les éléments (A1, A2, A3... ; 12, 14) en l'état replié et/ou déplié.

3. Combinaison selon la revendication 2, caractérisée en ce que la force d'encliquetage des dispositifs (48, 52) croît ou décroît d'élément en élément.

4. Combinaison selon l'une quelconque des revendications précédentes caractérisée en ce que les bandes (G, G', H, H') portent à leurs deux extrémités des charnières (16, 17) qui de leur côté portent chacune une patte (22 ; 23) pour fixer la charnière à l'élément respectif.

5. Combinaison selon l'une quelconque des revendications précédentes caractérisée en ce que chaque système à bande (G, G', H, H') comporte au moins deux premières bandes (G, G') et deux secondes bandes (H, H') et que chaque première et seconde bandes (G, H ; G', H') sont appariées.

6. Combinaison selon la revendication 2 et la revendication 4, caractérisée en ce que, dans l'état plié des éléments, chaque première et seconde bandes (G, H ; G', H') sont disposées l'une à côté de l'autre, et que le dispositif d'encliquetage (48, 52) agit entre les extrémités se faisant axialement face des charnières correspondantes (17, 16).

7. Combinaison selon la revendication 6, caractérisée en ce que le dispositif d'encliquetage (48, 50) comprend un verrouillage à bille (48) dont la bille (50) est disposée de manière mobile dans la direction de l'axe de pivotement (18), poussée par un ressort, et qui est fixé à l'une des charnières (17), la bille (50) s'introduisant de manière élastique dans un évidement d'encliquetage de l'autre charnière (16) lui faisant axialement face.

8. Combinaison selon la revendication 3 et la revendication 7, caractérisée en ce que la profondeur de l'évidement d'encliquetage augmente ou diminue d'élément en élément.

9. Combinaison selon la revendication 7 caractérisée en ce que l'évidement d'encliquetage est défini par l'ouverture axiale d'un roulement à billes annulaire (52) maintenu dans l'autre charnière (16).

10. Combinaison selon l'une quelconque des revendications précédentes caractérisée en ce que les éléments (A1, A2, A3, A4) sont des panneaux solaires.

11. Combinaison selon la revendication 10 caractérisée en ce que de chacun des deux côtés de la pile de panneaux solaires (A1... A4) pliés et empilés, est disposée une tige télescopique (58, 60) pouvant se déployer dans le sens du déploiement pour déplier les panneaux solaires, chacune des deux tiges pouvant être accrochée respectivement à l'un des deux côtés du panneau solaire supérieur (A4) de la pile.

12. Combinaison selon la revendication 11 caractérisée en ce qu'un entraîneur (64, 64') conformé sur chacun des côtés du panneau solaire supérieur (A4) dirigés vers les tiges télescopiques (58, 60) s'accroche à celle-ci lorsqu'on déploie la tige télescopique correspondante.

13. Combinaison selon la revendication 12 caractérisée en ce que l'entraîneur a la forme d'une boucle (64, 64') dépassant de la surface latérale du panneau solaire (A4) et que la tige télescopique (58, 60) présente à sa partie supérieure un crochet (62, 62') ouvert ou ouvrable dans le sens du déploiement, qui, lors du déploiement, s'accroche à la boucle (64, 64').

14. Combinaison selon la revendication 13 caractérisée en ce que l'ouverture du crochet (62, 62') est fermée au moins partiellement au moyen d'un élément (66, 66') flexible, fixé de manière que l'un de ses côtés puisse osciller librement.

15. Combinaison selon l'une quelconque des revendications 11 à 14 caractérisée en ce qu'un dispositif à ressort (70, 70') est prévu, qui, lorsque la tige télescopique est déployée, maintient en tension les panneaux solaires dans leur position dépliée.

16. Combinaison selon la revendication 13 et la revendication 15 caractérisée en ce que les entraîneurs, respectivement les boucles (64, 64'), sont montés de manière élastique et peuvent être sortis, rappelés par la force d'un ressort.

17. Combinaison selon l'une quelconque des revendications 10 à 16 caractérisée en ce que, entre deux panneaux solaires voisins (par exemple 12, 14), sont prévus des systèmes de rappel à ressort (86, 88) pour ramener dans leur position pliée les panneaux solaires déployés.

18. Combinaison selon la revendication 17 caractérisée en ce que chaque système de rappel à ressort comprend deux dispositifs de rappel à ressort (86, 88), les extrémités d'un côté des deux dispositifs de rappel à ressort étant fixées, respectivement s'accrochant, à un panneau solaire (14) à peu près au milieu entre les axes de pivotement (18, 20), et les deux autres extrémités étant chacune fixée, respectivement accrochée, à des zones situées à l'extrémité des bords latéraux, situées en face, de l'autre panneau solaire (12).

19. Combinaison selon l'une quelconque des revendications 10 à 18 caractérisée en ce que les bandes (G12, H12, G23, H23...) sont fabriquées en un matériau inextensible, flexible, souple, et conduisant l'électricité.

20. Combinaison selon l'une quelconque des revendications 1 à 9 caractérisée en ce que les éléments sont des éléments d'étagère.
